# EUROPÄISCHE PATENTSCHRIFT

(11) **EP 1 825 931 B1**
(45) Veröffentlichungstag und Bekanntmachung des Hinweises auf die Patenterteilung: **11.01.2012**
(21) Anmeldenummer: 07102758.5
(22) Anmeldetag: 21.02.2007
(51) Int. Cl.: B06B 1/02, A61C 17/20

(54) **Verfahren zum Betrieb einer dentalen Ultraschallvorrichtung sowie dentale Ultraschallvorrichtung**
Method for operating a dental ultrasonic device and dental ultrasonic device
Procédé de fonctionnement d'un dispositif à ultrasons dentaire tout comme dispositif à ultrasons dentaire

(30) Priorität: 22.02.2006 DE 102006008517
(43) Veröffentlichungstag der Anmeldung: 29.08.2007
(73) Patentinhaber: Sirona Dental Systems GmbH, 64625 Bensheim (DE)
(72) Erfinder: Kulhanek, Christian, 64683, Einhausen (DE); Rein, Matthias, 64653, Lorsch (DE)
(74) Vertreter: Sommer, Peter

(56) Entgegenhaltungen:
- EP-A- 1 369 185
- WO-A-99/18901
- GB-A- 2 356 311

## Beschreibung

Die Erfindung betrifft ein Verfahren zum Betrieb einer dentalen Ultraschallvorrichtung mit einer vorwählbaren Bearbeitungsleistung, wobei die Ultraschallvorrichtung ein Handstück, umfassend einen Ultraschallantrieb mit einer veränderbaren Ausgangsleistung und Ausgangsfrequenz und eine von dem Ultraschallantrieb angetriebene Werkzeugspitze, und eine Regelungseinheit zur Regelung der Ausgangsleistung des Ultraschallantriebes umfasst, wobei bei der Inbetriebnahme der Ultraschallvorrichtung ein vorgegebener Frequenzbereich mit einer vorgegebenen Ausgangsleistung durchfahren wird, wobei die Regelungseinheit aus diesem Durchfahren eine Resonanzfrequenz des Ultraschallantriebes mit der Werkzeugspitze bestimmt und den Ultraschallantrieb auf eine der Resonanzfrequenz entsprechenden Antriebsfrequenz und die vorgewählte Bearbeitungsleistung regelt.

Die Erfindung betrifft weiterhin ein Verfahren zum Betrieb einer dentalen Ultraschallvorrichtung vorgenannten Typs.

Die Erfindung betrifft darüber hinaus eine dentale Ultraschallvorrichtung vorgenannten Typs zur Durchführung der Verfahren.

### Stand der Technik

Bei dentalen Ultraschallvorrichtungen, zum Beispiel Scaler, ist es nötig, bei jedem Einschalten die Resonanzfrequenz des schwingenden Systems, bestehend aus einem Ultraschallantrieb sowie einer von dem Ultraschallantrieb angetriebenen Werkzeugspitze, zu bestimmen. Dies Werkzeugspitze wird bei der Bearbeitung abgenutzt und kann Deformationen erfahren, was sich auf die Resonanzfrequenz des Systems auswirkt.

Darüber hinaus hängt die Resonanzfrequenz auch von dem Belastungszustand der Werkzeugspitze ab. Es findet eine merkliche Verschiebung der Resonanzfrequenz statt, wenn die Werkzeugspitze an einem zu bearbeitenden Zahn anliegt.

Die DE 600 01 416 T2 offenbart eine Kontrollvorrichtung für ein zahnärztliches Ultraschallhandstück, die einen piezoelektrischen Transducer eines Schwingungserzeugers des Handstücks regelt. Die Vorrichtung ist in der Lage, die Serienresonanzfrequenz unabhängig von der Art des Gewebes, an das das Instrument herangeführt wird, zu halten. Dafür sind zwei Stromkreise vorgesehen, ein Arbeitsstromkreis und ein Steuerstromkreis, wobei der Steuerstromkreis die Phasenverschiebung zwischen Strom und Spannung misst und elektrisch kompensiert.

Die DE 39 25 459 A1 offenbart einen Ultraschallerzeuger mit einem piezoelektrischen Wandler. Der Treiberkreis des piezoelektrischen Wandlers ist aus einem durch einen Mikrocomputer gesteuerten Schaltregler gebildet, der einen im Tastverhältnis und in der Frequenz in Abhängigkeit von der mit einer Messschaltung erfassten Impedanz des Wandlers gesteuerten Oszillator bildet. Die Frequenz und das Tastverhältnis werden dabei so geregelt, dass ein bestimmter Impedanz-Sollwert erreicht wird. Die Impedanz-Messschaltung ist dabei ein Integrator, der als Tiefpass ausgebildet ist.

Ein gattungsgemäßes Verfahren ist aus der GB 2 356 311 bekannt.

Die bekannten Vorrichtungen und Verfahren weisen den Nachteil auf, dass die bei der Einschaltung vorgenommene Bestimmung der Resonanzfrequenz nur mit sehr hoher Leistung vorgenommen werden kann. Dies kann problematisch sein, wenn der Ultraschallscaler im Moment des Einschaltens bereits am Zahn anliegt, da durch die hohe Ausgangsleistung, die über der gewählten Bearbeitungsleistung liegt, Zahnsubstanz beschädigt werden kann.

Ein weiterer Nachteil des Standes der Technik ist, dass die herkömmlichen Ultraschall-Elektroniken nicht in der Lage sind, die mechanische Abtragungsleistung für alle Werkzeugspitzen beliebig einzustellen. Es zeigt sich, dass die bekannten Vorrichtungen eine nutzbare Bearbeitungsleistungs-Bereich zwischen 30% und 100% einer maximal möglichen Bearbeitungsleistung haben.

Darüber hinaus sind die Verfahren zur Bestimmung der Resonanzfrequenz nur mit hohem Geräteaufwand möglich.

Es ist daher die Aufgabe der Erfindung, Verfahren zum Betrieb einer dentalen Ultraschallvorrichtung und eine Ultraschallvorrichtung anzugeben, die die Nachteile des Standes der Technik nicht aufweisen, insbesondere eine Bestimmung der Resonanzfrequenz des Ultraschallsystems bei niedriger Leistung ermöglichen und eine zuverlässige Nachführung der Resonanzfrequenz im Betrieb mit einfachen Mitteln zulassen.

### Offenbarung der Erfindung

Die Aufgabe der Erfindung wird gelöst durch die in den unabhängigen Ansprüchen offenbarten Verfahren und Vorrichtung. Vorteilhafte Ausgestaltungen der Erfindungen sind in den Unteransprüchen wiedergegeben.

Ein Verfahren zum Betrieb einer dentalen Ultraschallvorrichtung mit einer vorwählbaren Bearbeitungsleistung, wobei die Ultraschallvorrichtung ein Handstück, umfassend einen Ultraschallantrieb mit einer veränderbaren Ausgangsleistung und Ausgangsfrequenz und eine von dem Ultraschallantrieb angetriebene Werkzeugspitze, und eine Regelungseinheit zur Regelung der Ausgangsleistung des Ultraschallantriebs umfasst, sieht vor, dass bei der Inbetriebnahme der Ultraschallvorrichtung ein vorgegebener Frequenzbereich mit einer vorgegeben Ausgangsleistung durchfahren wird, wobei die Regelungseinheit aus diesem Durchfahren eine Resonanzfrequenz des Ultraschallantriebes mit der Werkzeugspitze bestimmt und den Ultraschallantrieb auf eine der Resonanzfrequenz entsprechenden Antriebsfrequenz und die vorgewählte Bearbeitungsleistung regelt. Die Resonanzfrequenz des Ultraschallantriebes wird über Mittel zur Feststellung einer Wirkleistung bestimmt, wobei während dieser Feststellung die Ausgangsleistung höchstens der vorgewählten Bearbeitungsleistung entspricht.

Die Wirkleistung ist definiert als die elektrische Leistung, die für die Umwandlung in andere Leistungen, zum Beispiel mechanische, thermische oder chemische Leistungen, verfügbar ist. Die Wirkleistung ist der arithmetische Mittelwert der zeitabhängigen Momentanleistung. Die Wirkleistung hängt somit von dem Strom- und Spannungsverlauf und der Phasendifferenz zwischen Strom und Spannung ab. Im Resonanzfall wird diese Phasendifferenz minimiert, so dass die Wirkleistung maximal wird. Daher lässt sich über eine Bestimmung der Wirkleistung die Resonanzfrequenz eines elektrisch angetriebenen Ultraschallsystems bestimmen. Der Vorteil ist, dass dies auch bei niedrigen Ausgangsleistungen möglich ist und diese Bestimmung der Ausgangsleistung zur Bestimmung der Resonanzfrequenz nicht größer gewählt werden muss als die vorgewählte Bearbeitungsleistung. Beschädigungen der Zahnsubstanz können so vermieden werden.

Die Ausgangsleistung ist die von der Ultraschallvorrichtung tatsächlich abgegebene elektrische Leistung und die Bearbeitungsleistung ist die mechanische Leistung am Zahn.

Erfindungsgemäß wird die Wirkleistung durch Mittelwertbildung des Produktes aus dem Momentanstrom und der Momentanspannung bestimmt. Der Momentanstrom und die Momentanspannung sind der zum Messzeitpunkt bestimmte Strom- bzw. Spannungswert.

Auch andere Arten zur Bestimmung der Wirkleistung sind denkbar, beispielsweise eine Messung der Abwärme oder ähnliches. Der Momentanstrom und die Momentanspannung können jedoch problemlos und präzise während des Betriebes bestimmt und ausgewertet werden.

Vorteilhafterweise wird die Wirkleistung während des Betriebs der Ultraschallvorrichtung zumindest in Zeitabständen bestimmt und an die Regelungseinheit weitergeleitet. Es kann eine kontinuierliche Bestimmung der Wirkleistung vorgesehen sein oder auch eine sich regelmäßig wiederholende Bestimmung der Wirkleistung. Auch ist es möglich, die Wirkleistung zu bestimmen, wenn die Regelungseinheit anhand anderer Messgrößen einen Regelungsbedarf feststellt.

Vorteilhafterweise bestimmt die Regelungseinheit zur Bestimmung der Wirkleistung die Kurvenform des zeitlichen Strom- und/oder Spannungsverlaufs. Die Wirkleistung lässt sich in diesem Fall durch Integration oder gewichtete Summation bestimmen.

Vorteilhafterweise werden zur Bestimmung der Kurvenform nur die positiven Halbwellen des zeitlichen Stromverlaufs und/oder des zeitlichen Spannungsverlaufs herangezogen. Die Schwingungszustände des Ultraschallsystems sind empirisch bekannt, so dass eine Auswertung der positiven Halbwellen ausreichend für eine Bestimmung der Wirkleistung ist.

Vorteilhafterweise wird die Antriebsfrequenz während des Betriebes der Ultraschallvorrichtung in einem Bereich, der zwischen 0,001 und 0,5 % der Resonanzfrequenz liegt, um die Resonanzfrequenz herum geändert und die Wirkleistung bei der geänderten Antriebsfrequenz bestimmt, wobei ein Bereich zwischen 0,001 und 0,1 % besonders bevorzugt ist. Auf diese Weise lässt sich die Wirkleistung bei der der Resonanzfrequenz benachbarten Frequenzen bestimmen.

Besonders vorteilhaft ist es, wenn die Antriebsfrequenz solange weiter in die geänderte Richtung verändert wird, solange die Wirkleistung zunimmt. Damit ist es möglich, ein Maximum der Wirkleistung zu finden und zu halten. Die Kurvenverläufe und die Änderung der Resonanzfrequenz in Abhängigkeit des Belastungszustandes der Werkzeugspitze sind verglichen mit einer Schwingungsdauer hinreichend langsam, so dass die Verschiebung der Resonanzfrequenz stetig stattfindet und daher mit diesem Verfahren mit geringem Aufwand stets die optimale Antriebsfrequenz bereitgestellt wird.

Vorteilhafterweise ist die Bearbeitungsleistung um mindestens 70% der maximalen Bearbeitungsleistung verringerbar, insbesondere jedoch um mindestens 80%, und zwar gerade auch mit der Möglichkeit, die Resonanzfrequenz nach wie vor zu ermitteln. Dies erhöht die Anwendbarkeit der dentalen Ultraschallvorrichtung. Die behandelnde Person ist in der Lage, mit sehr niedrigen Bearbeitungsleistungen in empfindlichen Bereichen zu arbeiten, bei denen man ansonsten zu Handinstrumenten greifen müsste. Anstelle der Bearbeitungsleistung kann auch die Ausgangsleistung betrachtet werden, da diese ungefähr proportional zur Bearbeitungsleistung ist. Die genaue Beziehung zwischen der Bearbeitungsleistung und der Ausgangsleistung hängt von der Art der Spitze ab, ist aber für jede Spitze bekannt.

Vorteilhafterweise wird in zumindest einem Betriebszustand das Abfallen der Wirkleistung durch ein Anheben der Versorgungsspannung lastabhängig zumindest teilweise kompensiert. Unter Last, also wenn die Spitze am Zahn anliegt, ändert sich die Resonanzfrequenz und damit geht die Wirkleistung zurück und die Amplitude der Spitze am Zahn wird kleiner.

Aufgrund der Möglichkeit, auch bei geringer Ausgangsleistung zuverlässig die Resonanzfrequenz zu finden, ergibt sich die weitere Möglichkeit, das mechanische Abtragsverhalten an der Spitze gezielt auf die Anwendung anzupassen und das Abfallen der Wirkleistung und somit die Verringerung der Amplitude am Zahn durch ein Anheben der Versorgungsspannung lastabhängig zumindest teilweise zu kompensieren. Diese Betriebsart kann durch ein gesondertes Zuschalten erfolgen.

Ohne Kompensation des Leistungsabfalls liegt ein schonendes Abtragsverhalten vor. Bei Belastung fällt die Abtragsleistung ab, wodurch ein einfaches Glätten des Zahns möglich ist.

Mit Kompensation des Leistungsabfalls liegt ein aggressives Abtragsverhalten vor. Bei Belastung bleibt die Abtragsleistung erhalten bzw. kann sogar noch erhöht, also überkompensiert werden, wenn eine entsprechende Ansteuerung erfolgt. Dadurch kann sehr bequem Zahnmaterial entfernt werden.

Ein weiterer Aspekt der Erfindung betrifft ein Verfahren zum Betrieb einer dentalen Ultraschallvorrichtung mit einer vorwählbaren Bearbeitungsleistung, wobei die Ultraschallvorrichtung ein Handstück, umfassend einen Ultraschallantrieb mit einer veränderbaren Ausgangleistung und Ausgangsfrequenz und eine von dem Ultraschallantrieb angetriebene Werkzeugspitze, und eine Regelungseinheit zur Regelung der Ausgangsleistung des Ultraschallantriebes umfasst. Während des Betriebs wird zumindest in Zeitabständen die Antriebsfrequenz in einem Bereich, der zwischen 0,001 und 0,5 % einer Resonanzfrequenz liegt, wobei ein Bereich zwischen 0,001 und 0,1 % besonders bevorzugt ist, um die Resonanzfrequenz herum geändert und die Wirkleistung bei der geänderten Antriebsfrequenz bestimmt.

Auf diese Weise ist es möglich, während des laufenden Betriebes die momentane Wirkleistung mit der Wirkleistung bei geringfügig geänderten Antriebsfrequenzen in Beziehung zu setzen.

Besonders vorteilhaft ist es, wenn die Wirkleistung durch Mittelwertbildung des Produktes aus dem Momentanstrom und der Momentanspannung bestimmt wird. Eine solche Bestimmung ist mit bekannten Bauteilen einfach und kostengünstig möglich.

Besonders vorteilhaft ist es darüber hinaus, wenn die Regelungseinheit zur Bestimmung der Wirkleistung die Kurvenform des zeitlichen Strom- und/oder Spannungsverlaufs bestimmt. Dies ermöglicht ein besonders einfaches Bestimmen der Wirkleistung.

Vorteilhafterweise werden zur Bestimmung der Kurvenform nur die positiven Halbwellen des zeitlichen Stromverlaufs und/oder des zeitlichen Spannungsverlaufs herangezogen. Es hat sich gezeigt, dass dies ausreichend ist, um die Wirkleistung zu bestimmen.

Vorteilhafterweise wird die Antriebsfrequenz in die geänderte Richtung so lange weiterverändert, so lange die Wirkleistung zunimmt. Auf diese Weise lässt sich immer das Maximum der Wirkleistung in Abhängigkeit der Antriebsfrequenz einstellen, wodurch die dentale Ultraschallvorrichtung stets in Resonanz betrieben wird.

Vorteilhafterweise ist die Bearbeitungsleistung um mindestens 70% der maximalen Bearbeitungsleistung verringerbar, insbesondere jedoch um mindestens 80%. Dies vergrößert den Einsatzbereich der Ultraschallvorrichtung.

Die Erfindung betrifft weiterhin eine dentale Ultraschallvorrichtung mit einer vorwählbaren Bearbeitungsleistung, wobei die Ultraschallvorrichtung ein Handstück, umfassend einen Ultraschallantrieb mit einer veränderbaren Ausgangsleistung und Ausgangsfrequenz und eine von dem Ultraschallantrieb angetriebene Werkzeugspitze, und eine Regelungseinheit zur Regelung der Ausgangsleistung des Ultraschallantriebs umfasst. Es sind Mittel zur Messung einer Wirkleistung des Ultraschallantriebes vorhanden, die mit der Regelungseinheit zusammenwirken. Mit einer solchen dentalen Ultraschallvorrichtung lässt sich auf einfache Weise eine Regelung der Antriebsfrequenz vornehmen.

Vorteilhafterweise sind die Mittel zur Messung der Wirkleistung als Strommesser und als Spannungsmesser ausgebildet. Diese Bauteile sind im Stand der Technik bekannt und ermöglichen eine zuverlässige Bestimmung der Wirkleistung.

Vorteilhafterweise sind die Mittel zur Messung der Wirkleistung Bestandteil der Regelungseinheit. Derartige integrierte Bauteile sind besonders kostengünstig herzustellen.

### Kurzbeschreibung der Zeichnungen

Das erfindungsgemäße Verfahren wird anhand der Zeichnungen erläutert. Es zeigen:
- Fig. 1: eine Prinzipskizze einer erfindungsgemäßen dentalen Ultraschallvorrichtung, die
- Fig. 2: ein Diagramm mit der Abhängigkeit des Betrages der Impedanz von der Frequenz, die
- Fig. 3: ein Diagramm mit der Abhängigkeit der Wirkleistung von der Frequenz, die
- Fig. 4: einen vergrößerten Ausschnitt des Diagramms von Fig. 3 zur Erläuterung der Funktionsweise der Antriebsfrequenzoptimierung und die
- Fig. 5: ein Flussdiagramm zur Darstellung der erfindungsgemäßen Verfahren.

### Ausführungsform der Erfindung

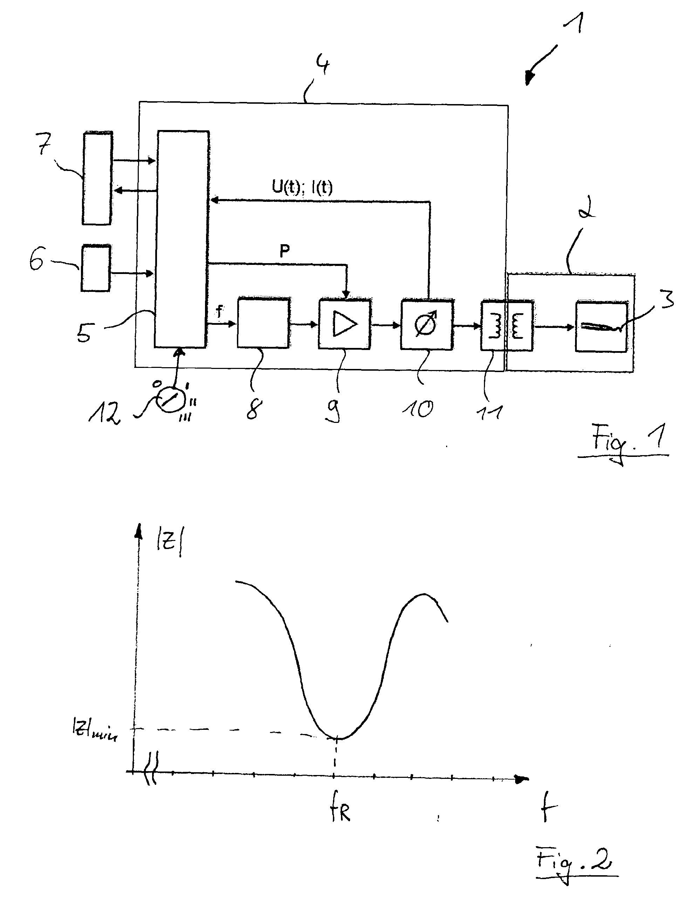

Die **Fig. 1** zeigt eine Prinzipskizze einer erfindungsgemäßen dentalen Ultraschallvorrichtung 1. Die dentale Ultraschallvorrichtung 1 besteht aus einem schematisch dargestellten Handstück 2 mit einer Werkzeugspitze 3. In das Handstück 2 ist ein piezoelektrischer Ultraschallantrieb integriert, der nicht dargestellt ist. Weiterhin ist eine Regelungseinheit 4 zur Regelung des Ultraschallhandstücks vorgesehen.

Den Kern der Regelungseinheit 4 bildet ein Controller 5 mit integrierten Schaltkreisen. Mittels eines an den Controller 5 angeschlossenen Potentiometers 6 und einem Interface 7 erhält der Controller 5 Regelvorgaben zur Regelung des Ultraschallantriebes. Über das Potentiometer 6 wird die gewünschte Bearbeitungsleistung vorgegeben, beispielsweise durch einen nicht dargestellten Fußschalter. Das Interface 7 kann weitere Vorgaben über den Betriebsmodus der Werkzeugspitze 3 geben, beispielsweise die Aggressivität der Werkzeugspitze oder eine Vorgabe über eine maximale Bearbeitungsleistung.

Der Controller 5 kann darüber hinaus Signale an das Interface 7 übergeben, beispielsweise zur Anzeige des Betriebszustandes der Ultraschallvorrichtung 1 an einer nicht dargestellten Anzeigeeinheit.

In Abhängigkeit von den durch das Interface 7 und das Potentiometer 6 eingegebenen Regelvorgaben steuert der Controller 5 einen spannungsgesteuerten Oszillator 8, der in Abhängigkeit von der angelegten Spannung eine Frequenz erzeugt. Der Controller 5 gibt einem Verstärker 9 eine Leistungsvorgabe, die von der gewählten Bearbeitungsleistung abhängt.

Dem spannungsgesteuerten Oszillator 8 und dem Verstärker 9 ist ein Strom- und Spannungsmesser 10 nachgeschaltet, der den zeitlichen Strom- und Spannungsverlauf erfasst und an den Controller 5 übergibt. Ein Übertrager 11 transformiert die Spannung hoch und überträgt sie an den piezoelektrischen Ultraschallantrieb.

An der Ultraschallvorrichtung 1 ist ein Stellmittel in Form eines Vorwahlschalters 12 vorgesehen, mit dem man eine Lastkompensation einschalten bzw. einstellen kann, um entweder in der Stellung "0" ein einfaches Glätten des Zahns oder in den Stellungen "I" bis "III" ein Entfernen von Zahnmaterial mit zunehmender Abtragsleistung durchzuführen.

Aufgrund der Tatsache, dass das gesamte System Rückkopplungen erfährt, ist die abgegebene Spannung und der abgegebene Strom von dem Schwingungs- und Belastungszustand der Werkzeugspitze 3 abhängig. Diese Abhängigkeit wird in den nachfolgenden Diagrammen erläutert.

**Fig. 2** stellt den Verlauf des Betrages der Impedanz in Abhängigkeit von der Frequenz bei einem dentalen Ultraschallsystem dar. In Resonanz schwingen Strom und Spannung gleichphasig, so dass der Betrag der Impedanz minimal wird.

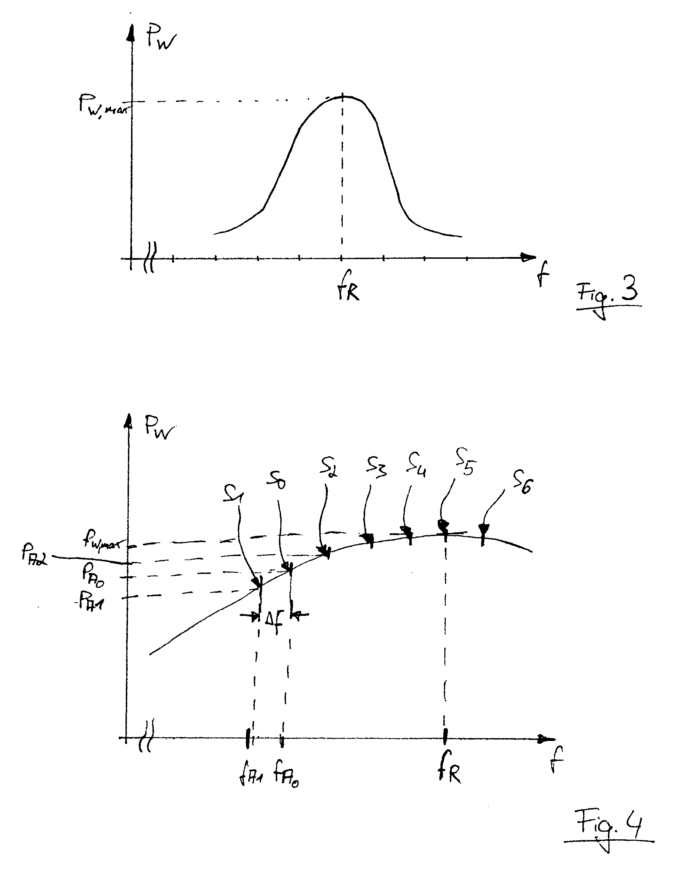

Die Gleichphasigkeit von Strom und Spannung bewirkt weiterhin, dass das Produkt aus Strom und Spannung maximal wird und damit auch die resultierende Wirkleistung. Wie in **Fig. 3** dargestellt, fällt die Wirkleistung P_{W} zu beiden Seiten der Resonanzfrequenz f_{R} rasch ab, so dass nur ein schmales Maximum P_{W,max} vorhanden ist. Da die Abtragsleistung in einem näherungsweise proportionalen Zusammenhang mit der Wirkleistung steht, sollte die dentale Ultraschallvorrichtung immer in Resonanz betrieben werden, um eine optimale Bearbeitungsleistung zur Verfügung zu haben und darüber hinaus einen definierten Schwingungszustand zu halten.

Die **Fig. 4** stellt einen vergrößerten Ausschnitt des Diagramms von Fig. 3 im Bereich der Resonanzfrequenz f_{R} dar. Durch Laständerungen der Werkzeugspitze 3 wird die Resonanzfrequenz f_{R} verschoben. Die Verschiebung kann abhängig von der verwendeten Spitze etwa 1000 Hz hin zu höheren oder niedrigeren Frequenzen betragen. Die ursprünglich mit der Resonanzfrequenz f_{R} zusammenfallende Antriebsfrequenz f_{A} treibt den Ultraschallantrieb daher mit einer von der maximalen Wirkleistung P_{W,max} unter Umständen stark abweichenden Wirkleistung P_{A0} an.

Ausgehend von dem Startwert S₀ bei der Frequenz f_{A0} mit der Wirkleistung P_{A0} variiert der Controller 5 die Antriebsfrequenz um die Frequenz Δf hin zu einer kleineren Antriebsfrequenz f_{A1}. Die gemessene Wirkleistung P_{A1} ist niedriger als die anfängliche Wirkleistung P_{A0}, so dass die Richtung der Iteration geändert wird.

Ausgehend von dem Iterationsschritt S₁ wird die Resonanzfrequenz um 2 x Δf in Richtung einer höheren Frequenz verschoben und der Iterationspunkt S₂ erreicht. Die Wirkleistung P_{A2} liegt höher als die Wirkleistung P_{A0}.

Im nächsten Schritt wird die Antriebsfrequenz daher wieder um Δf angehoben und der Punkt S₃ erreicht. Dieser Vorgang wird so lange wiederholt, bis S₆ ausgehend von S₅ erreicht wird, der eine niedrigere Wirkleistung als S₅ hat.

Δf liegt in einem Bereich zwischen 0,01 Prozent und 1 % der Resonanzfrequenz f_{R}. Bei üblichen Resonanzfrequenzen zwischen 20 und 30 kHz beträgt Δf üblicherweise zwischen 10 und 20 Hz. Auch feinere Frequenzsprünge sind bei entsprechender Ausgestaltung der Regelungseinheit 4 denkbar, Frequenzsprünge von 1 Hz oder weniger lassen sich ebenfalls erreichen.

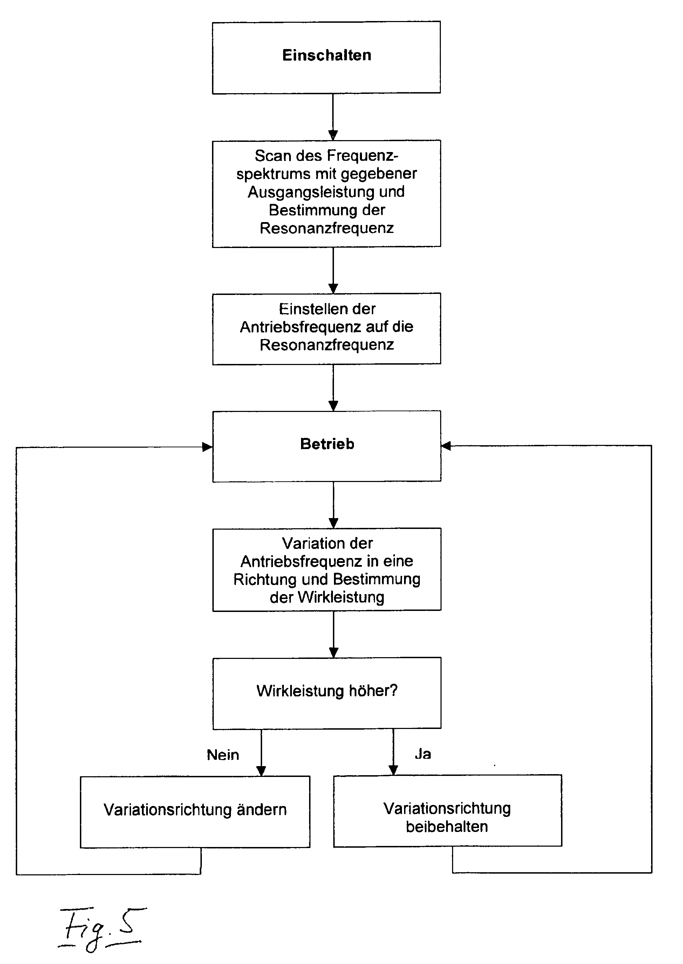

Die **Fig. 5** zeigt ein Flussdiagramm zur Darstellung der erfindungsgemäßen Verfahren.

Beim Einschalten der Ultraschallvorrichtung wird zu erst ein gegebener Abschnitt eines Frequenzspektrums, in dem die Resonanzfrequenz liegt, mit gegebener Ausgangsleistung durchfahren. Die Ausgangsleistung entspricht dabei der voreingestellten Bearbeitungsleistung. Aus dem Durchfahren des Frequenzspektrums wird die Resonanzfrequenz bestimmt und in einem nächsten Schritt die Antriebsfrequenz auf die Resonanzfrequenz eingestellt. Danach ist die Ultraschallvorrichtung einsatzbereit.

Zur Nachführung der Antriebsfrequenz wird während des Betriebs eine Variation der Antriebsfrequenz in eine Richtung vorgenommen und bei der variierten Antriebsfrequenz eine Wirkleistung bestimmt. Sofern die Wirkleistung höher ist als die vorangegangen bestimmte Wirkleistung. Sofern die Wirkleistung höher ist als die vorangegangene Wirkleistung, wird die Variationsrichtung beibehalten, andernfalls wird die Variationsrichtung geändert und die Variation der Antriebsfrequenz wird in die andere Richtung vorgenommen.

Befindet sich der Ultraschallantrieb im Maximum der Wirkleistung, so findet eine permanente Umschaltung der Variationsrichtung statt.

## Patentansprüche

1. Verfahren zum Betrieb einer dentalen Ultraschallvorrichtung (1) mit einer vorwählbaren Bearbeitungsleistung (P_{A}), wobei die Ultraschallvorrichtung (1) ein Handstück (2), umfassend einen Ultraschallantrieb mit einer veränderbaren Ausgangsleistung und Ausgangsfrequenz und eine von dem Ultraschallantrieb angetriebene Werkzeugspitze (3), und eine Regelungseinheit (5) zur Regelung der Ausgangsleistung des Ultraschallantriebes umfasst, wobei bei der Inbetriebnahme der Ultraschallvorrichtung (1) ein vorgegebener Frequenzbereich mit einer vorgegebenen Ausgangsleistung durchfahren wird und die Regelungseinheit (5) aus diesem Durchfahren eine Resonanzfrequenz des Ultraschallantriebes mit der Werkzeugspitze (3) bestimmt und den Ultraschallantrieb auf eine der Resonanzfrequenz (f_{R}) entsprechenden Antriebsfrequenz (f_{A}) und die vorgewählte Bearbeitungsleistung (P_{A}) regelt, wobei die Resonanzfrequenz des Ultraschallantriebes über Mittel (10) zur Feststellung einer Wirkleistung bestimmt wird, **dadurch gekennzeichnet, dass** während dieser Feststellung die Ausgangsleistung höchstens der vorgewählten Bearbeitungsleistung entspricht, wobei die Wirkleistung (P_{W}) durch Mittelwertbildung des Produktes aus dem Momentanstrom und der Momentanspannung bestimmt wird.

2. Verfahren nach Anspruch 1, **dadurch gekennzeichnet, dass** die Wirkleistung (P_{W}) während des Betriebs der Ultraschallvorrichtung (1) zumindest in Zeitabständen bestimmt wird und an die Regelungseinheit (5) weitergeleitet wird.

3. Verfahren nach einem der Ansprüche 1 bis 2, **dadurch gekennzeichnet, dass** die Regelungseinheit (5) zur Bestimmung der Wirkleistung (P_{W}) die Kurvenform des zeitlichen Strom- und/oder Spannungsverlaufs bestimmt.

4. Verfahren nach Anspruch 3, **dadurch gekennzeichnet, dass** zur Bestimmung der Kurvenform nur die positiven Halbwellen des zeitlichen Stromverlaufs und/oder zeitlichen Spannungsverlaufs herangezogen werden.

5. Verfahren nach einem der Ansprüche 1 bis 4, **dadurch gekennzeichnet, dass** die Antriebsfrequenz (f_{A}) während des Betriebs der Ultraschallvorrichtung (1) in einem Bereich (Δf), der zwischen 0,001 und 0,5 % der Resonanzfrequenz (f_{R}) liegt, vorzugsweise zwischen 0,001 und 0,1 % der Resonanzfrequenz (f_{R}), um die Resonanzfrequenz (f_{R}) herum geändert und die Wirkleistung (P_{W}) bei der geänderten Antriebsfrequenz (f_{A1}, f_{A2}) bestimmt wird.

6. Verfahren nach Anspruch 5, **dadurch gekennzeichnet, dass** die Antriebsfrequenz (f_{A}) solange weiter in die geänderte Richtung verändert wird, solange die Wirkleistung (P_{W}) zunimmt.

7. Verfahren nach einem der Ansprüche 1 bis 6, **dadurch gekennzeichnet, dass** die Bearbeitungsleistung um mindestens 70 % der maximalen Bearbeitungsleistung (P_{A,max}) verringerbar ist.

8. Verfahren nach einem der Ansprüche 1 bis 7, **dadurch gekennzeichnet, dass** in zumindest einem Betriebszustand das Abfallen der Wirkleistung durch ein Anheben der Versorgungsspannung lastabhängig zumindest teilweise kompensiert ist.

9. Verfahren zum Betrieb einer dentalen Ultraschallvorrichtung (1) mit einer vorwählbaren Bearbeitungsleistung, wobei die Ultraschallvorrichtung (1) ein Handstück (2), umfassend einen Ultraschallantrieb mit einer veränderbaren Ausgangsleistung und Ausgangsfrequenz und eine von dem Ultraschallantrieb angetriebene Werkzeugspitze (4), und eine Regelungseinheit (5) zur Regelung der Ausgangsleistung (P_{A}) des Ultraschallantriebes umfasst, **dadurch gekennzeichnet, dass** während des Betriebs zumindest in Zeitabständen die Antriebsfrequenz (f_{A}) in einem Bereich (Δf), der zwischen 0,01 und 1% einer Resonanzfrequenz (f_{R}) liegt, vorzugsweise zwischen 0,001 und 0,1 % der Resonanzfrequenz (f_{R}), um die Resonanzfrequenz (f_{R}) herum geändert und die Wirkleistung (P_{W}) bei der geänderten Antriebsfrequenz (f_{A1}, f_{A2}) bestimmt wird, wobei die Wirkleistung (P_{W}) durch Mittelwertbildung des Produktes aus dem Momentanstrom und der Momentanspannung bestimmt wird.

10. Verfahren nach Anspruch 9, **dadurch gekennzeichnet, dass** die Regelungseinheit (5) zur Bestimmung der Wirkleistung (P_{W}) die Kurvenform des zeitlichen Stromverlaufs und/oder zeitlichen Spannungsverlaufs bestimmt .

11. Verfahren nach Anspruch 10, **dadurch gekennzeichnet, dass** zur Bestimmung der Kurvenform nur die positiven Halbwellen des zeitlichen Stromverlaufs und/oder des zeitlichen Spannungsverlaufs herangezogen werden.

12. Verfahren nach einem der Ansprüche 9 bis 11, **dadurch gekennzeichnet, dass** die Antriebsfrequenz (f_{A}) in die geänderte Richtung solange weiter verändert wird, solange die Wirkleistung (P_{W}) zunimmt.

13. Verfahren nach einem der Ansprüche 9 bis 12, **dadurch gekennzeichnet, dass** die Bearbeitungsleistung um mindestens 70 % der maximalen Bearbeitungsleistung verringerbar ist.

14. Verfahren nach einem der Ansprüche 9 bis 13, **dadurch gekennzeichnet, dass** in zumindest einem Betriebszustand das Abfallen der Wirkleistung durch ein Anheben der Versorgungsspannung lastabhängig zumindest teilweise kompensiert ist.

15. Dentale Ultraschallvorrichtung (1) mit einer vorwählbaren Bearbeitungsleistung, wobei die Ultraschallvorrichtung (1) ein Handstück (2), umfassend einen Ultraschallantrieb mit einer veränderbaren Ausgangsleistung und Ausgangsfrequenz und eine von dem Ultraschallantrieb angetriebene Werkzeugspitze (3), und eine Regelungseinheit (5) zur Regelung der Ausgangsleistung des Ultraschallantriebes umfasst, **dadurch gekennzeichnet, dass** Mittel (10) zur Messung einer Wirkleistung (P_{W}) des Ultraschallantriebes vorhanden sind, die mit der Regelungseinheit (5) zusammenwirken, wobei die Mittel (10) zur Messung der Wirkleistung als Strommesser und als Spannungsmesser ausgebildet sind.

16. Dentale Ultraschallvorrichtung (1) nach Anspruch 15, **dadurch gekennzeichnet, dass** die Mittel (10) zur Messung der Wirkleistung Bestandteil der Regelungseinheit (5) sind.

17. Dentale Ultraschallvorrichtung (1) nach einem der Ansprüche 15 bis 16, **dadurch gekennzeichnet, dass** ein Stellmittel (12) vorgesehen ist, um von einem Betriebszustand mit vorgegebener lastunabhängiger Wirkleistung in einen Betriebszustand mit einem Anheben der Versorgungsspannung zur zumindest teilweisen Kompensation des lastbedingte Abfallens der Wirkleistung zu wechseln.

## Claims

1. A method for operating a dental ultrasonic device (1) providing a preselectable tooling performance (P_{A}), wherein said ultrasonic device (1) includes a handpiece (2) comprising an ultrasonic driving mechanism having a modifiable power output and output frequency and a dental tip (3), driven by said ultrasonic driving mechanism, and a control unit (5) for controlling the power output of said ultrasonic driving mechanism, and wherein at the start-up of said ultrasonic device (1) a preselectable frequency range is scanned at a preselectable power output and said control unit (5) ascertains from said scan a resonance frequency of said ultrasonic driving mechanism comprising said dental tip (3) and regulates said ultrasonic driving mechanism to provide a driving frequency (f_{A}) equal to said resonance frequency (f_{R}) and to the preselectable tooling performance (P_{A}), and the resonance frequency of said ultrasonic driving mechanism is determined via means (10) for determining an effective power output, **characterized in that** during this determination, the power output corresponds to not more than the preselected tooling performance and the effective power (P_{W}) is determined by averaging the product of the instantaneous current and the instantaneous voltage.

2. The method as defined in claim 1, **characterized in that** the effective power (P_{W}) is determined during the operation of said ultrasonic device (1) at least at time intervals and is delivered to said control unit (5) .

3. The method as defined in claim 1 or claim 2, **characterized in that** said control unit (5) for determination of the effective power (P_{w}) determines the shape of the temporal current curve and/or the temporal voltage curve.

4. The method as defined in claim 3, **characterized in that** when determining the shape of the curves only the positive half waves of the temporal current curve and/or temporal voltage curve are taken into account.

5. The method as defined in any one of claims 1 to 4, **characterized in that** the driving frequency (f_{A}) is modified during operation of the ultrasonic device (1) within a range (Δf) between 0.001 and 0.5 % of the resonance frequency (f_{R}), preferably by from 0.001 to 0.1 % of the resonance frequency (f_{R}) above or below the resonance frequency (f_{R}) and the effective power (P_{W}) is determined at said modified driving frequency (f_{A1}, f_{A2}).

6. The method as defined in claim 5, **characterized in that** the driving frequency (f_{A}) is further modified in the modified direction as long as the effective power (P_{W}) increases.

7. The method as defined in any one of claims 1 to 6, **characterized in that** the tooling performance is reducible by at least 70 % of the maximum tooling performance (P_{A,max}) .

8. The method as defined in any one of claims 1 to 7, **characterized in that** in at least one operating state the decrease in effective power is at least partially load-dependently compensated by an increase in the supply voltage.

9. A method for operating a dental ultrasonic device (1) providing a preselectable tooling performance, wherein said ultrasonic device (1) includes a handpiece (2) comprising an ultrasonic driving mechanism having a modifiable power output and output frequency and a dental tip (4), driven by the ultrasonic driving mechanism, and a control unit (5) for controlling the power output (P_{A}) of said ultrasonic driving mechanism, **characterized in that** during operation, the driving frequency (f_{A}) within a range (Δf) of from 0.01 to 1 % of the resonance frequency (f_{R}) is preferably modified between 0.001 and 0.1 % of the resonance frequency (f_{R}) above or below the resonance frequency (f_{R}), at least at time intervals, and the effective power (P_{W}) is determined at said modified driving frequency (f_{A1}, f_{A2}), the effective power (P_{W}) being determined by averaging the product of the instantaneous current and the instantaneous voltage.

10. The method as defined in claim 9, **characterized in that** said control unit (5) for determining the effective power (P_{W}) determines the shape of the temporal current curve and/or temporal voltage curve.

11. The method as defined in claim 10, **characterized in that** for the purpose of determining the shape of the curves only the positive half waves of the temporal current curve and/or the temporal voltage curve are taken into account.

12. The method as defined in any one of claims 9 to 11, **characterized in that** the driving frequency (f_{A}) is further modified in the modified direction as long as the effective power (P_{W}) increases.

13. The method as defined in any one of claims 9 to 12, **characterized in that** the tooling performance is reducible by at least 70 % of the maximum tooling performance.

14. The method as defined in any one of claims 9 to 13, **characterized in that** in at least one operating state the decrease in effective power is at least partially load-dependently compensated by an increase in the supply voltage.

15. A dental ultrasonic device (1) providing a preselectable tooling performance, wherein said ultrasonic device (1) includes a handpiece (2) comprising an ultrasonic driving mechanism having a modifiable power output and output frequency and a dental tip (4), driven by the ultrasonic driving mechanism, and a control unit (5) for controlling the power output (P_{A}) of said ultrasonic driving mechanism, **characterized in that** means (10) for measuring the effective power (P_{W}) of said ultrasonic driving mechanism are present that cooperate with said control unit (5), and said means (10) for measuring the effective power are in the form of ammeters and voltmeters.

16. The dental ultrasonic device (1) as defined in claim 15, **characterized in that** said means (10) for measuring the effective power are part of said control unit (5) .

17. The dental ultrasonic device (1) as defined in claim 15 or claim 16, **characterized in that** an adjusting means (12) is provided for the purpose of effecting a change from an operating state involving a preselected load-independent effective power output to an operating state involving an increase in the supply voltage for the purpose of at least partially compensating the load-specific decrease in the effective power output.

## Revendications

1. Procédé d'utilisation d'un dispositif à ultrasons dentaire (1) à puissance de traitement présélectionnable (PA), le dispositif à ultrasons (1) comprenant une pièce à main (2), comprenant un actionneur à ultrasons à puissance et fréquence de sortie variables et une pointe d'outil (3) entraînée par l'actionneur à ultrasons, et une unité de régulation (5) pour réguler la puissance de sortie de l'actionneur à ultrasons, dans lequel, lors de la mise en service du dispositif à ultrasons (1), une plage de fréquences prédéfinie est balayée à une puissance de sortie prédéfinie et l'unité de régulation (5) détermine à partir de ce balayage une fréquence de résonance de l'actionneur à ultrasons avec la pointe d'outil (3) et régule l'actionneur à ultrasons sur une fréquence d'actionnement (f_{A}) correspondant à la fréquence de résonance (f_{R}) et régule la fréquence de traitement (P_{A}) présélectionnée, dans lequel la fréquence de résonance de l'actionneur à ultrasons est déterminée par des moyens (10) permettant de déterminer une puissance active, **caractérisé en ce que** pendant cette détermination, la puissance de sortie correspond au maximum à la puissance de traitement présélectionnée, la puissance active (P_{W}) étant déterminée par le calcul de la moyenne du produit du courant instantané et de la tension instantanée.

2. Procédé selon la revendication 1, **caractérisé en ce que** la puissance active (P_{W}) est déterminée pendant le fonctionnement du dispositif à ultrasons (1) au moins à certains intervalles de temps et retransmise à l'unité de régulation (5).

3. Procédé selon l'une quelconque des revendications 1 à 2, **caractérisé en ce que** l'unité de régulation (5) détermine l'allure de la courbe chronologique de courant et/ou de tension afin de déterminer la puissance active (P_{W}) .

4. Procédé selon la revendication 3, **caractérisé en ce que** pour la détermination de l'allure, seules les demi-ondes positives de la courbe chronologique de courant et/ou de la courbe chronologique de tension soient prises en compte.

5. Procédé selon l'une quelconque des revendications 1 à 4, **caractérisé en ce que** la fréquence d'actionnement (f_{A}) pendant le fonctionnement du dispositif à ultrasons (1) est modifiée autour de la fréquence de résonance (f_{R}) dans une plage (Δf) qui est située entre 0,001 et 0,5 % de la fréquence de résonance (f_{R}), de préférence entre 0,001 et 0,1 % de la fréquence de résonance (f_{R}), et la puissance active (P_{W}) est déterminée à la fréquence d'actionnement modifiée (f_{A1}, f_{A2}).

6. Procédé selon la revendication 5, **caractérisé en ce que** l'on continue de modifier la fréquence d'actionnement (f_{A}) dans le sens de la modification tant que la puissance active (P_{W}) augmente.

7. Procédé selon l'une quelconque des revendications 1 à 6, **caractérisé en ce que** la puissance de traitement peut être diminuée d'au moins 70 % de la puissance de traitement maximale (P_{A,max}) .

8. Procédé selon l'une quelconque des revendications 1 à 7, **caractérisé en ce que** dans au moins un mode de fonctionnement, la baisse de la puissance active est compensée au moins en partie par une augmentation de la tension d'alimentation en fonction de la charge.

9. Procédé d'utilisation d'un dispositif à ultrasons dentaire (1) à puissance de traitement présélectionnable, dans lequel le dispositif à ultrasons (1) comprend une pièce à main (2), comprenant un actionneur à ultrasons à puissance et fréquence de sortie variables et une pointe d'outil (4) entraînée par l'actionneur à ultrasons, et une unité de régulation (5) pour réguler la puissance de sortie (P_{A}) de l'actionneur à ultrasons, **caractérisé en ce qu'**en cours de fonctionnement, au moins à certains intervalles de temps, la fréquence d'actionnement (f_{A}) est modifiée autour de la fréquence de résonance (f_{R}) dans une plage (Δf) qui se situe entre 0,01 et 1 % d'une fréquence de résonance (f_{R}), de préférence entre 0,001 et 0,1 % de la fréquence de résonance (f_{R}), et la puissance active (P_{W}) est déterminée à la fréquence d'actionnement modifiée (f_{A1}, f_{A2}) , dans lequel la puissance active (P_{w}) est déterminée par le calcul de la moyenne du produit du courant instantané et de la tension instantanée.

10. Procédé selon la revendication 9, **caractérisé en ce que** pour la détermination de la puissance active (P_{w}), l'unité de régulation (5) détermine l'allure de la courbe chronologique de courant et/ou de la courbe chronologique de tension.

11. Procédé selon la revendication 10, **caractérisé en ce que** pour la détermination de l'allure, seules les demi-ondes positives de la courbe chronologique de courant et/ou de la courbe chronologique de tension soient prises en compte.

12. Procédé selon l'une quelconque des revendications 9 à 11, **caractérisé en ce que** l'on continue de modifier la fréquence d'actionnement (f_{A}) dans le sens de la modification tant que la puissance active (P_{W}) augmente.

13. Procédé selon l'une quelconque des revendications 9 à 12, **caractérisé en ce que** la puissance de traitement peut être diminuée d'au moins 70 % de la puissance de traitement maximale.

14. Procédé selon l'une quelconque des revendications 9 à 13, **caractérisé en ce que** dans au moins un mode de fonctionnement, la baisse de la puissance active est compensée au moins en partie par une augmentation de la tension d'alimentation en fonction de la charge.

15. Dispositif à ultrasons dentaire (1) à puissance de traitement pré-sélectionnable, dans lequel le dispositif à ultrasons (1) comprend une pièce à main (2) comprenant un actionneur à ultrasons à puissance et fréquence de sortie variables et une pointe d'outil (3) entraînée par l'actionneur à ultrasons, et une unité de régulation (5) pour réguler la puissance de sortie de l'actionneur à ultrasons, **caractérisé en ce qu'**il existe des moyens (10) permettant de mesurer une puissance active (P_{W}) de l'actionneur à ultrasons qui coopèrent avec l'unité de régulation (5), dans lequel les moyens (10) pour mesurer la puissance active sont réalisés sous la forme d'un ampèremètre et d'un voltmètre.

16. Dispositif à ultrasons dentaire (1) selon la revendication 15, **caractérisé en ce que** les moyens (10) permettant de mesurer la puissance active font partie de l'unité de régulation (5).

17. Dispositif à ultrasons dentaire (1) selon l'une quelconque des revendications 15 à 16, **caractérisé en ce qu'**un moyen de réglage (12) est prévu afin de passer d'un mode de fonctionnement à puissance active prédéfinie et indépendante de la charge à un mode de fonctionnement avec augmentation de la tension d'alimentation afin de compenser au moins en partie la baisse de la puissance active due à la charge.
